# EUROPEAN PATENT SPECIFICATION

(11) **EP 0 354 814 B1**
(45) Date of publication and mention of the grant of the patent: **12.10.1994**
(21) Application number: 89308205.7
(22) Date of filing: 11.08.1989
(51) Int. Cl.: G06K 1/12, G06K 15/00

(54) **Printers and ancillary systems**
Drucker und untergeordnete Systeme
Imprimantes et systèmes subordonnés

(30) Priority: 12.08.1988 GB 8819174; 20.12.1988 GB 8829669
(43) Date of publication of application: 14.02.1990
(73) Proprietor: ESSELTE METO INTERNATIONAL GmbH, 64636 Heppenheim (DE)
(72) Inventor: Pettigrew, Robert Martin, Foxton Cambridgeshire (GB); Harry, Alan John, Royston Hertfordshire SG8 6BA (GB); Nailor, Paul Robert, Finsbury Park London N4 (GB); Adelmann, Fred, D-6930 Eberbach am Neckar (DE); Franzen, Peter, D-6932 Hirschhorn am Neckar (DE); Schoon, Juergen, D-6930 Ederbach am Neckar (DE)
(74) Representative: Abrams, Michael John

(56) References cited:
- EP-A- 0 209 752
- GB-A- 2 192 076
- US-A- 3 880 078
- PATENT ABSTRACTS OF JAPAN, vol. 9, no. 77 (M-369), 6th April 1985 & JP-A-59-207263 (YOKOGAWA HIYUURETSUTO PATSUKAADO) 24.11.1984

## Description

This invention relates to printers and ancillary systems for use therewith.

Bar codes are now widely used for ready identification and tracking of products, samples and documents. For example, they are finding increasing uses in medical, pharmaceutical and research centres as well as in retail areas. Bar codes are now widely used at goods-in and check-out locations associated, for example, with retail trading. They facilitate the use of fully automatic in-and-out systems and, in some instances, do away with the need for price labels on the products. Many supermarkets stock 25,000 to 30,000 items for sale, however, and do not have sufficient shelf space to allocate all of these items to a particular position; as a result, even if there is a bar code on such products, there is still a need for price marking. Nevertheless, the use of a bar code scanning system to identify the goods may reduce labour requirements significantly and thus produce considerable savings.

In supermarkets, typically 95 - 96% of food items going through the check-out have a bar code already printed at source by the manufacturer. For non-food items, the number of products bar coded at source is typically 80 - 85% of those going through the check-out.

In order to apply price labels to items already carrying a bar code, and to add a bar code to those products which are not coded at source, it is common for a retail outlet to use one or more label printers. These may be hand-held, portable or fixed in position. Typically, three stationary printers may be used by up to ten people. Strips of labels will be printed and taken to the product and either applied by hand or with a dispenser. Some retailers consider that it is more economical for each operative to have his own hand-held bar code label printer.

If a national bar code has been allocated to a given product, this will normally be used by the retailer if no manufacturer's bar code is present. For products where no such national bar code has been allocated, it is up to the retailer to decide on his own bar code number. Typically, this number might be based on the numbering system used by the retailer before the introduction of bar code scanning to his store. In practice, the person generating bar codes with a printer will have with him source material which indicates the nature of the bar code for each product where a label is required. In medical applications, bar codes are useful in patient identification, specimen collection and distribution, pharmaceuticals distribution, document tracking, and management applications such as accounting, time recording/allocating, supplies management, and tracking of personnel and documents.

Hand-held labelling machines typically comprise a housing which is supported by a handle. Such a machine may include a label supply roll within said housing; a printing unit; and a keyboard for inputting data. When such a machine is used to print bar code labels, an operative will input the bar code number via the keyboard, and then activates a label feed mechanism and the printing unit to apply the requested bar code to one of the labels on the supply roll. After the bar code has been printed, the label feed mechanism moves the supply roll so that the printed label is accessible for application to the appropriate goods item.

The keyboard of such a printer can constitute a relatively bulky component of the overall printer, and furthermore the use of keyboards by operatives can give rise to errors which, with price code marking, may have serious consequences. It is therefore an object of the present invention to provide a printer which does not require an integral keyboard for inputting data, and which, in preferred embodiments, has increased versatility of operation and is capable of handling more data than conventional portable or hand-held printers.

According to the present invention, there is provided a printer which comprises a housing; a printing unit; means for supplying to said printing unit a substrate onto which indicia are to be printed; and means for inputting data to control the nature of the indicia printed at said printing unit, which means is arranged to function without the use of a pre-configured alpha-numeric keyboard,
characterised in that said means for inputting data comprises a cursor moving device and an integral graphics display system.

The printing unit will usually be an electrically operated unit; in other embodiments, however, the printing unit may be a mechanical print system.

In the present invention, the printers may be constructed and arranged to operate as stationary (fixed) printers, as portable printers or as hand-held printers.

A variety of different additional auxiliary means may be adopted for inputting data to a printer in accordance with this invention. Such means include mechanical, optical, electromagnetic, electrostatic, acoustic and ultrasonic devices; in some circumstances, it may be advantageous to employ more than one data input means with a given printer. In accordance with the invention, the main means for inputting data to a printer comprises a cursor moving device operatively coupled to a graphics interface. Examples of cursor moving devices useful in this invention are: a tracker ball; a mouse; and a joystick. Another possible arrangement is to use a rotatable knob carried by a shaft which is capable of axial displacement to permit multi-functional control. Typically, a tracker ball/graphics interface may be part of the printer itself, or it may be in the form of an ancillary unit connected to or connectable with the printer. The tracker ball can be used to identify and select one item from a given menu displayed by the graphics interface, whereby when an appropriate item is selected, data is transferred to the printing unit so as to generate indicia on the substrate which corresponds to the item selected from the graphics interface. In one particular example, the tracker ball/graphics interface unit allows an operative to select items from a series of successively more specialised menus until a particular brand of, for example, tinned baked beans is selected; the tracker ball/graphics unit then transfers data to the printing unit which is encoded to generate indicia, for example a bar code or other information, corresponding to the selected product. The tracker ball/graphics unit may additionally be used to transfer other data which may for example be pre-programmed. Operation of the graphics interface, and transfer of data from the tracker ball/graphics unit to the printing unit of the printer, can conveniently be under microprocessor control. The tracker ball/graphics unit will usually have an actuating device, e.g. a push button, for confirming selection of a given item to which the cursor has been moved in the display.

While the details given above have been in relation to the use of a tracker ball as the cursor moving device, the same arrangements apply equally to other types of cursor moving device.

Instead of a cursor moving device, a graphics display unit having a touch-sensitive screen may be employed.

The graphics interface may also include other display features, for example a dictionary of bar codes, stock items, suppliers, consumer-relevant data and stock control information. As compared with the use of an alpha-numeric keyboard, a unit in accordance with this aspect of the invention may provide greater ease of use and increased reliability in generating the correct printed output from the printer.

In another embodiment, the means for inputting data to the printer comprises additionally a speech recognition unit. In the simplest arrangement, the speech recognition unit is used as a the means for confirming selection of a particular item from the display - e.g. when the cursor is located against that item, so that the speech recognition unit replaces the actuating push button mentioned above. Alternatively, voice input may be used in place of alpha-numeric data from a keyboard for some or all the required functions/actuating steps. Preferably, the voice recognition system is adapted to recognise a limited vocabulary, for example a string of numbers. With such a system, an operative can read off the numerical code corresponding to a given bar code for a product, rather than key in the numerical data via an alpha-numeric keyboard. The voice recognition unit may alternatively be more comprehensive, in that it may be able to recognise speaker independent continuous or staccato speech with an extensive vocabulary.

In a third embodiment, the means for inputting data to the printer additionally comprises a memory card or a "smart card" which is pre-programmed with data. The smart card may be pre-programmed in any suitable way, typically by means of a portable data entry terminal having an alpha-numeric keyboard. Alternatively, the portable data entry terminal may have a bar code directory which in use is interrogated via a light pen.

A data entry terminal (which may be portable) for use with such a memory card or smart card may also contain a modular printing unit, e.g. one containing a thermal transfer head, which may then be inserted into a price-marking gun containing label advancing means. The data entry terminal may be used by itself for printing shelf edge labels and similar items.

In another mode of operation, a central data entry terminal may be used to print out a list of retail items which do not have a bar code applied by the manufacturer; the unit would then print out a bar code for each such item, which bar code would then be readable by a portable data entry terminal. In this way, the user of the system would use a list of items in conjunction with a printer incorporating a bar code reader. In order to input data to the printer, the user would sweep the bar code reader of the printer across the particular bar code displayed on his reference list which would then actuate the printing unit of the printer to generate a bar code label.

A further alternative embodiment involves the use of a plug-in smart card without requiring an alpha-numeric keyboard for its pre-programming. With such an embodiment, the printer would have for example a thumb-driven roller which would be used in conjunction with the smart card to instruct the printing unit to produce a bar code as required.

Various other additional auxiliary means for inputting data to the printer are available. For example, data input may be provided by electromagnetic radiation, e.g. by laser.

Such data input means may comprise a receiver arranged to function in conjunction with a transmitter device remote from the printer. The receiver may be a built-in receiver or transceiver provided in said printer.

Where the portable printer includes or requires memory, this may be provided by one or more plug-in cards - such as the memory card or "smart card" referred to hereinbefore. A series of cards may be used to represent the whole of a store's products arranged according to their nature - different cards, for example, being available for (a) fruit and vegetables, (b) sports wear, and (c) wines and spirits.

For a better understanding of the invention, and to show how the same may be carried into effect, reference will now be made, by way of example, to the accompanying drawings, in which:
FIGURE 1 illustrates one embodiment of a hand-held printer incorporating a tracker ball and graphics display;
FIGURE 2 illustrates a second embodiment of hand-held printer incorporating an auxiliary speech recognition unit;
FIGURE 3 illustrates a hand-held printer operating in conjunction with an auxiliary "smart card";
FIGURE 4 illustrates a portable printer in accordance with the invention;
FIGURE 5 illustrates an alternative cursor moving means for use in the invention;
FIGURE 6 illustrates schematically alternative auxiliary data input means;
FIGURE 7 illustrates a modular unit in accordance with this invention; and
FIGURE 8 illustrates in cross-sectional view a printing unit suitable for use in the present invention.

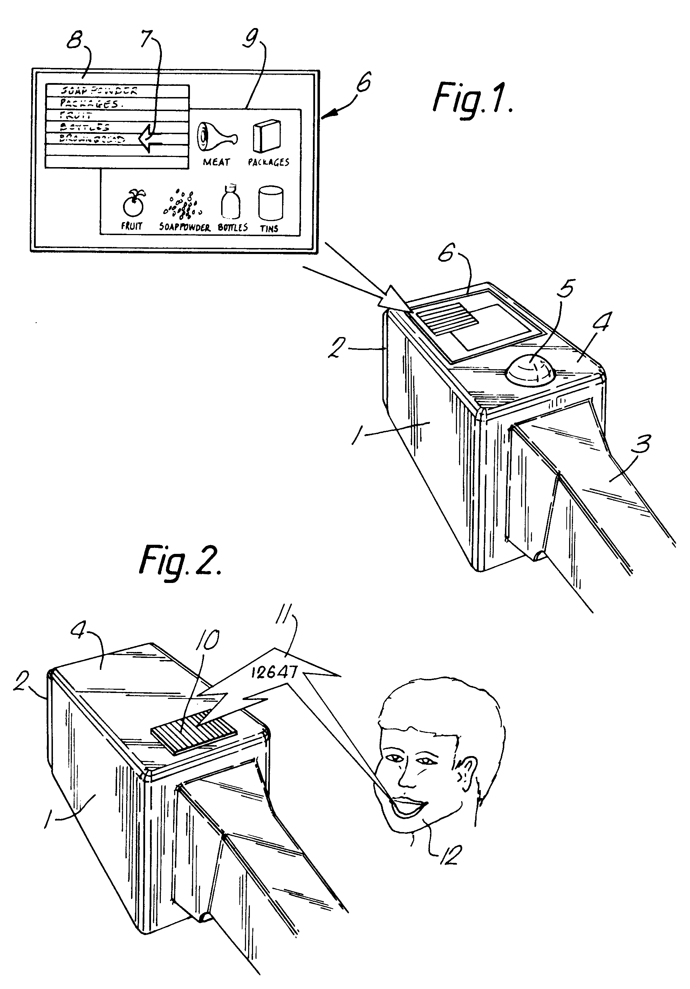

Referring now to Figure 1, a hand-held printer 1 comprises a housing 2 from one end of which a handle 3 extends. On the top face 4 of the housing there is located a tracker ball 5 and a graphics display 6. The screen 6 of the graphics display may be a touch-sensitive screen. The precise location of the tracker ball and the graphics display is a matter of design; ergonomic considerations will usually determine whether these integers are located on the top of the housing or elsewhere, for example on the handle 3. Operation of the tracker ball moves a marker 7 through a menu 8 which when one of the listed items is selected determines the items displayed in a sub-display 9. When the appropriate sub-display 9 is located, marker 7 is moved, via operation of tracker ball 5, to indicate the selected item. Selection of an item in this manner can be used to provide an input to an automatic stock control system. After selection of an item, the printing unit of printer 1 is actuated to provide indicia, for example a bar code, on a label which is fed from a roll housed within the printer to a print head, for example a thermographic print head, which generates the required bar code on a label.

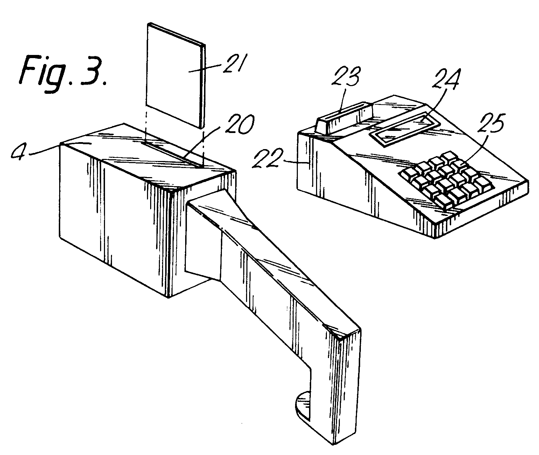

In Figures 2 and 3, the printer is similar in outward form to that shown in Figure 1 except that there is no tracker ball 5 and no graphics display 6 is shown. In Figure 2, the housing 2 includes on its top surface 4 a microphone 10 which picks up numerical data 11 spoken by an operative 12 and conveys electrical signals corresponding to the spoken data to a speech recognition unit (not shown) within the printer.

Figure 3 shows a printer having on its top surface 4 a slot 20 designed to receive a smart card 21. The smart card is pre-programmed by means of a portable data entry terminal 22 which includes a slot 23 for a card which is to be programmed, a display panel 24 and an alpha-numeric keyboard 25 for data input.

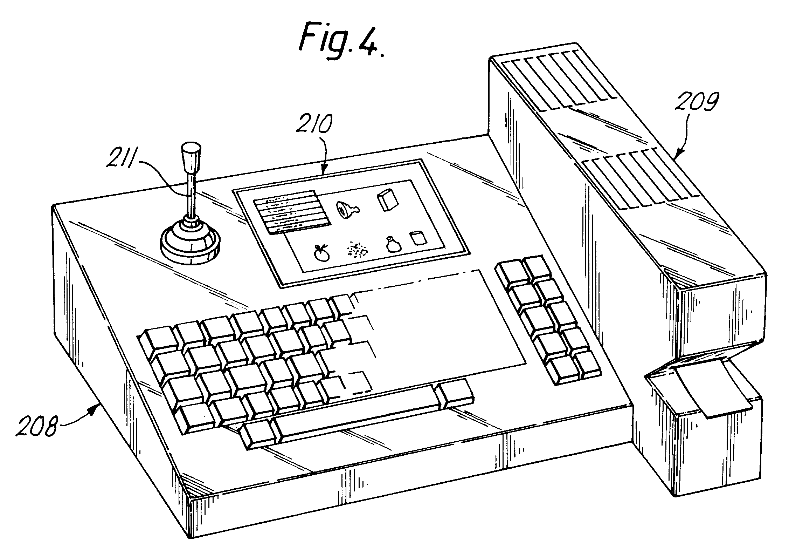

Figure 4 illustrates a portable printer in accordance with this invention. The printer comprises a data input console 208 linked to a printing unit 209. A graphics display unit 210 and a cursor moving device in the form of a joystick 211 are provided on the console 208.

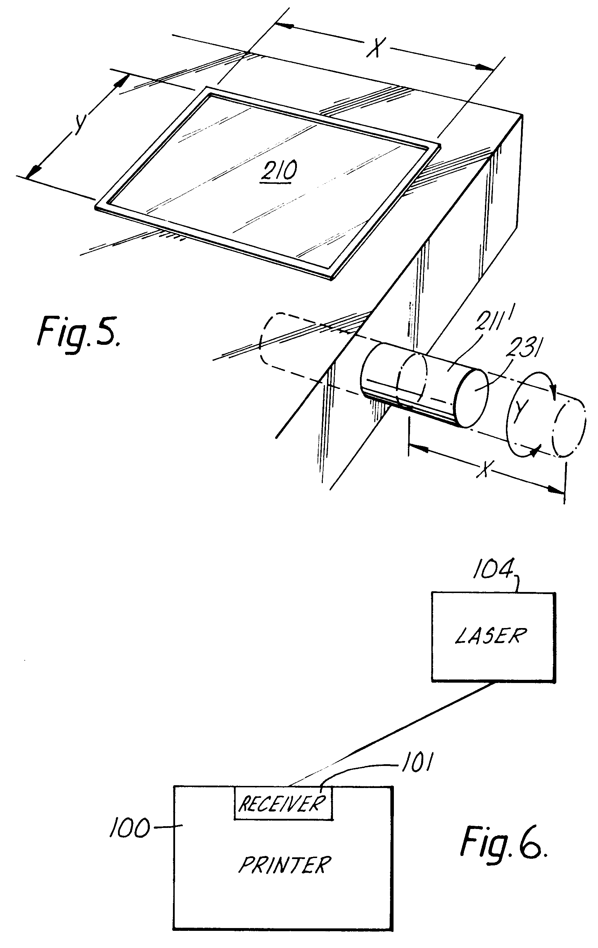

In Fig. 5, the cursor moving device 211′ is in the form of a rotatable knob 231. Rotation of the knob (arrows Y) moves the cursor of graphics display unit 210 in the Y-coordinate direction, while in/out movement of the knob in the direction of arrows X moves the cursor of the graphics display unit 210 in the X-coordinate direction.

Figure 6 illustrates schematically some alternative auxiliary data input means. Here, the printer 100 includes a receiver 101 which is tuned to respond to appropriate input signals. These may be from a laser 104.

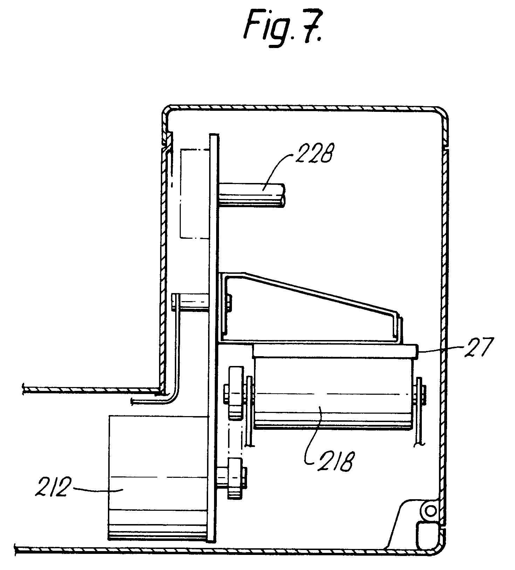

Figure 7 illustrates a modular printing unit which may be used in the present invention. The printing unit comprises a stepper motor 212, a roller 218 driven indirectly by motor 212, a print head 27 adjacent to roller 218 and a take-up spool 228 for a thermal transfer ribbon cassette.

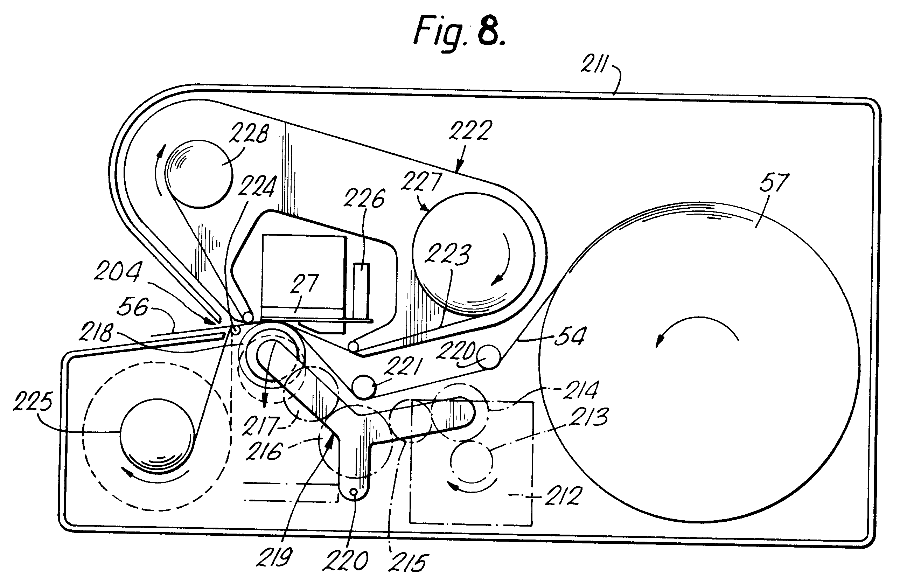

Figure 8 illustrates a printing unit in cross-section. The unit is located in a housing 211. A label supply roll 57 feeds a strip 54 of labels to print head 27. Stepper motor 212 has a rotary output shaft 213 which drives a roller 214. Slave rollers 215, 216, 217 and 218 are themselves driven by roller 214. This bank of rollers (214-218) is supported by a generally Y-shaped mounting mechanism 219 one arm of which is pivotally mounted at 220. Clockwise rotation about pivot 220 brings the roller 214 into contact with drive 213, and also brings the label strip 54 into contact or near contact with the print head 27 (by the action of roller 218). The course of the label roll 54 towards print head 27 is guided by capstans 220 and 221. A cassette 222 containing thermal transfer ribbon 223 is located about the print head 27. After leaving the print head 27, the substrate 54 moves towards outlet slot 204. Just upstream of this slot, the label backing roll paves over a roller 224 to be wound onto a take-up spool 225. A printed label 56 simultaneously issues from slot 204.

As illustrated in Fig. 8, the cassette 222 fits symmetrically around the print head 27. The cassette 222 may therefore be reversed (in the manner of an audio cassette) if it is of a suitable type. The print head 27 is able to operate as a direct print head, i.e. without the use of ribbon 223, and circuitry 226 is provided to adjust the operating parameters of the print head accordingly.

## Claims

1. A printer (1) which comprises a housing (2); a printing unit (27); means for supplying to said printing unit a substrate (54) onto which indicia are to be printed; and means for inputting data to control the nature of the indicia printed at said printing unit, which means is arranged to function without the use of a pre-configured alpha-numeric keyboard, characterised in that said means for inputting data comprises a cursor moving device and an integral graphics display system (6).

2. A printer as claimed in claim 1, characterised in that said printing unit (27) is a disposable printhead module.

3. A printer as claimed in claim 1 or 2, characterised in that said printing unit (27) is an electrically operated printing unit.

4. A printer as claimed in claim 1 or 2, characterised in that said printing unit (27) is a mechanical print system.

5. A printer as claimed in claim 1, characterised in that said cursor moving device is a tracker ball (5).

6. A printer as claimed in claim 1, characterised in that said cursor moving device is a mouse.

7. A printer as claimed in claim 1, characterised in that said cursor moving device is a joystick (211).

8. A printer as claimed in claim 1, characterised in that said cursor moving device is a rotatable knob (231) mounted on an axially displaceable shaft.

9. A printer as claimed in claim 1, 2, 3 or 4, characterised in that said means for inputting data-comprises a graphics display system (6) having a touch sensitive screen.

10. A printer as claimed in claim 1, 2, 3 or 4, characterised in that said means for inputting data further comprises a speech recognition unit.

11. A printer as claimed in claim 1, 2, 3 or 4, characterised in that said means for inputting data further comprises a memory card or a "smart card" (21) which is pre-programmed with data.

12. A printing system which comprises a printer as claimed in claim 11 together with a data entry terminal (22) for programming said memory card or "smart card" (21).

13. A printer as claimed in claim 1, 2, 3 or 4, characterised in that said means for inputting data further comprises a laser (104).

## Patentansprüche

1. Drucker (1), umfassend ein Gehäuse (2); eine Druckeinheit (27); eine Einrichtung zum Einspeisen eines mit Kennzeichnungen zu bedruckenden Substrats (54) in die Druckeinheit; sowie eine Vorrichtung zur Eingabe von Daten, um die Art der mit der Druckeinheit zu druckenden Kennzeichnungen zu steuern, wobei die Vorrichtung so entworfen ist, daß sie ohne Einsatz einer vorkonfigurierten alphanumerischen Tastatur funktioniert,
dadurch gekennzeichnet, daß die Vorrichtung zur Eingabe von Daten eine Cursorbewegungseinrichtung und ein integriertes Grafikdarstellungssystem (6) umfaßt.

2. Drucker nach Anspruch 1, dadurch gekennzeichnet, daß die Druckeinheit (27) ein Wegwerf-Druckkopfmodul ist.

3. Drucker nach Anspruch 1 oder 2, dadurch gekennzeichnet, daß die Druckeinheit (27) eine elektrisch betriebene Druckeinheit ist.

4. Drucker nach Anspruch 1 oder 2, dadurch gekennzeichnet, daß die Druckeinheit (27) ein mechanisches Drucksystem ist.

5. Drucker nach Anspruch 1, dadurch gekennzeichnet, daß die Cursorbewegungseinrichtung eine Führungskugel (5) ist.

6. Drucker nach Anspruch 1, dadurch gekennzeichnet, daß die Cursorbewegungseinrichtung eine "Maus" ist.

7. Drucker nach Anspruch 1, dadurch gekennzeichnet, daß die Cursorbewegungseinrichtung ein Steuerknüppel (211) ist.

8. Drucker nach Anspruch 1, dadurch gekennzeichnet, daß die Cursorbewegungseinrichtung ein drehbarer Knopf (231) ist, der auf einer axial verschiebbaren Welle montiert ist.

9. Drucker nach Anspruch 1, 2, 3 oder 4, dadurch gekennzeichnet, daß die Dateneingabevorrichtung ein Grafikanzeigesystem (6) mit einem berührungsempfindlichen Bildschirm umfaßt.

10. Drucker nach Anspruch 1, 2, 3 oder 4, dadurch gekennzeichnet, daß die Dateneingabevorrichtung zudem eine Spracherkennungseinheit umfaßt.

11. Drucker nach Anspruch 1, 2, 3 oder 4, dadurch gekennzeichnet, daß die Dateneingabevorrichtung weiterhin eine vorab mit Daten programmierte Speicherkarte (21) oder "intelligente Karte" beinhaltet.

12. Drucksystem, das einen Drucker nach Anspruch 11 in Verbindung mit einem Dateneingabeterminal (22) aufweist, damit die Speicherkarte oder die "intelligenten Karte" (21) programmiert werden kann.

13. Drucker nach Anspruch 1, 2, 3 oder 4, dadurch gekennzeichnet, daß die Dateneingabeeinrichtung zudem einen Laser (104) umfaßt.

## Revendications

1. Imprimante (1) comprenant un logement (2); une unité d'impression (27); des moyens destinés à alimenter ladite unité d'impression avec un substrat (54) sur lequel des étiquettes sont à imprimer; et des moyens destinés à entrer des données afin de contrôler la nature des étiquettes imprimées sur ladite unité d'impression, lesquels moyens sont disposés pour fonctionner sans utiliser un clavier alphanumérique préconfiguré, caractérisée en ce que lesdits moyens destinés à entrer les données comprennent un dispositif de déplacement de curseur et un système d'affichage graphique intégral (6).

2. Imprimante selon la revendication 1, caractérisée en ce que ladite unité d'impression (27) est un module à tête d'impression jetable.

3. Imprimante selon la revendication 1 ou 2, caractérisée en ce que ladite unité d'impression (27) est une unité d'impression à commande électrique.

4. Imprimante selon la revendication 1 ou 2, caractérisée en ce que ladite unité d'impression (27) est un système d'impression mécanique.

5. Imprimante selon la revendication 1, caractérisée en ce que ledit dispositif de déplacement de curseur est une boule roulante (5).

6. Imprimante selon la revendication 1, caractérisée en ce que ledit dispositif de déplacement de curseur est une souris.

7. Imprimante selon la revendication 1, caractérisée en ce que ledit dispositif de déplacement de curseur est une manette de commande (211).

8. Imprimante selon la revendication 1, caractérisée en ce que ledit dispositif de déplacement de curseur est un bouton tournant (231) monté sur un arbre déplaçable axialement.

9. Imprimante selon la revendication 1, 2, 3 ou 4, caractérisée en ce que lesdits moyens destinés à entrer des données comprennent un système d'affichage graphique (6) comportant un écran tactile.

10. Imprimante selon la revendication 1, 2, 3 ou 4, caractérisée en ce que lesdits moyens destinés à entrer des données comprennent en outre une unité de reconnaissance de la parole.

11. Imprimante selon la revendication 1, 2, 3 ou 4, caractérisée en ce que lesdits moyens destinés à entrer des données comprennent en outre une carte à mémoire ou une "carte intelligente" (21) qui est préprogrammée avec les données.

12. Système d'impression comprenant à la fois une imprimante selon la revendication 11 et un terminal d'introduction de données (22) destiné à programmer ladite carte à mémoire ou ladite "carte intelligente" (21).

13. Imprimante selon la revendication 1, 2, 3 ou 4, caractérisée en ce que lesdits moyens destinés à entrer des données comprennent en outre un laser (104).
